# EUROPEAN PATENT SPECIFICATION

(11) **EP 1 099 573 B1**
(45) Date of publication and mention of the grant of the patent: **14.04.2004**
(21) Application number: 00902032.2
(22) Date of filing: 01.02.2000
(51) Int. Cl.: B60C 19/12, B29C 73/20, B29D 30/30

(54) **PNEUMATIC TIRE AND METHOD FOR MANUFACTURING PNEUMATIC TIRE**
LUFTREIFEN UND VERFAHREN ZUR HERSTELLUNG DES LUFTREIFENS
PNEUMATIQUE ET PROCEDE DE FABRICATION DE PNEUMATIQUE

(30) Priority: 01.02.1999 JP 2419099
(43) Date of publication of application: 16.05.2001
(73) Proprietor: Sumitomo Rubber Industries, Ltd., Kobe-shi, Hyogo 651-0072 (JP)
(72) Inventor: OCHIAI, Kiyoshi, Kobe-shi, Hyogo-ken 651-1206 (JP); ISHIKAWA, Takeshi, Kakogawa-shi, Hyogo-ken 675-0016 (JP)
(74) Representative: Manitz, Finsterwald & Partner
(86) International application number: PCT/JP2000/000532
(87) International publication number: WO 2000/046049

(56) References cited:
- EP-A- 0 893 236
- DE-A- 19 839 911
- JP-A- 47 026 433
- JP-A- 47 026 481
- JP-A- 48 049 864
- JP-A- 53 124 803
- JP-A- 60 064 834
- JP-B1- 34 010 934
- JP-B1- 50 025 683
- US-A- 1 419 470
- US-A- 4 239 076

## Description

### TECHNICAL FIELD

The present invention relates to a tubeless pneumatic tyre in which air leakage from a puncture in a tread due to running over of a nail and the like can be suppressed and a method of producing the same.

### BACKGROUND TECHNIQUE

As one of means for preventing generation of air leakage from a puncture portion due to running over of a nail and the like, there is proposed a pneumatic tyre having a seal layer in which a puncture sealant for sealing a nail puncture and the like is provided inside a tread.

Such a tyre can be produced by directly coating an inner liner rubber on a moulding former with the sealant, then by assembling a carcass ply and a tread rubber to form a raw tyre cover in a raw cover moulding step before vulcanisation, and by vulcanising the raw tyre cover.

In another method as shown in Figure 7, there is proposed (Japanese Patent Application Laid-open No. 80323875, for example) a method in which a tyre t is vulcanised to form a sack-shaped portion d where the inner liner rubber a does not adhere to a sealing rubber sheet b by applying a mould release agent c such as talc between the inner liner rubber a facing the tyre inner cavity and the sealing rubber sheet b attached to the inside of the inner liner rubber a and then injecting a puncture sealant through an injection hole e communicating with an inside of the sack-shaped portion d by using an injector f after vulcanisation.

In the former method, however, the step of applying the sealant is troublesome, variations are generated in dimensions of the application, and it is difficult to obtain a uniform seal layer and a uniform tyre. In the latter method, because the injection step for injecting the sealant into the sack-shaped portion d after vulcanisation of the tyre is necessary and a closing step for closing the injection hole e for injecting the sealant is required additionally, the production process becomes complicated.

Another proposal in EP 0 893 236 provides a self-sealing tyre which has a circumferentially extending packing layer inside the tyre and extending substantially from tread edge to tread edge. The packing layer is made of rubber compound and has within it a sealant. The packing layer is adhered to the inner liner of the tyre. Such a construction however requires the packing layer to be positioned and adhered which increases the complexity of building the tyre.

### DISCLOSURE OF THE INVENTION

The present invention has been accomplished with the above circumstance in view and it is an object of the invention to provide a pneumatic tyre having a puncture sealing function which can be produced easily without the above application step and injection step of the sealant and the closing operation of the injection hole and method of producing the same.

The present invention provides a pneumatic tyre as set out in claim 1.

A second aspect of the invention provides a method of producing the tyre of claim 1 and this aspect is set out in claim 2.

### BRIEF DESCRIPTION OF THE DRAWINGS

Figure 1 is a sectional view of an embodiment of a pneumatic tyre;
Figure 2 is a perspective view showing an example of a sack-shaped member;
Figure 3 is a perspective view of an example of a seal unit;
Figure 4 is a schematic sectional view of an inner liner rubber bonding step and a seal layer forming step;
Figure 5 is a schematic sectional view schematically showing a carcass ply bonding step;
Figure 6 is a schematic sectional view schematically showing a raw cover body forming step; and

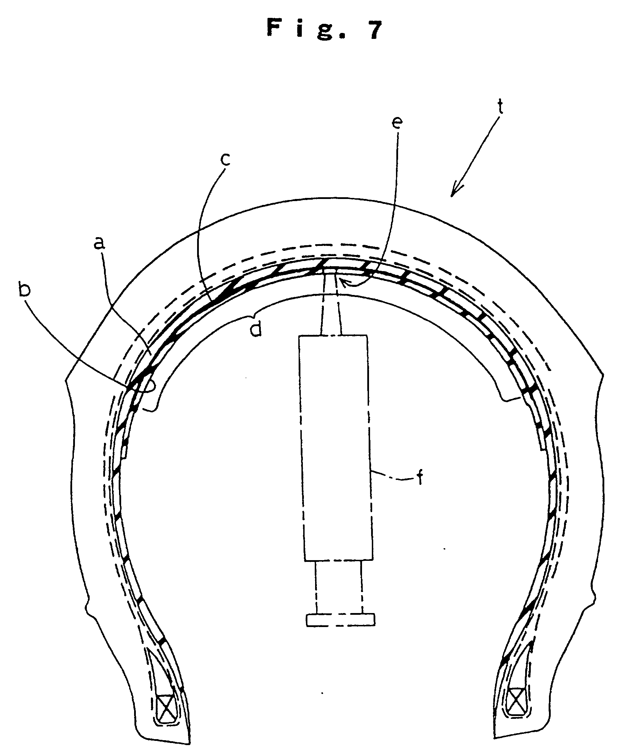

Figure 7 is a sectional view for explaining a conventional method of producing a pneumatic tyre.

### PREFERRED EMBODIMENT OF THE INVENTION

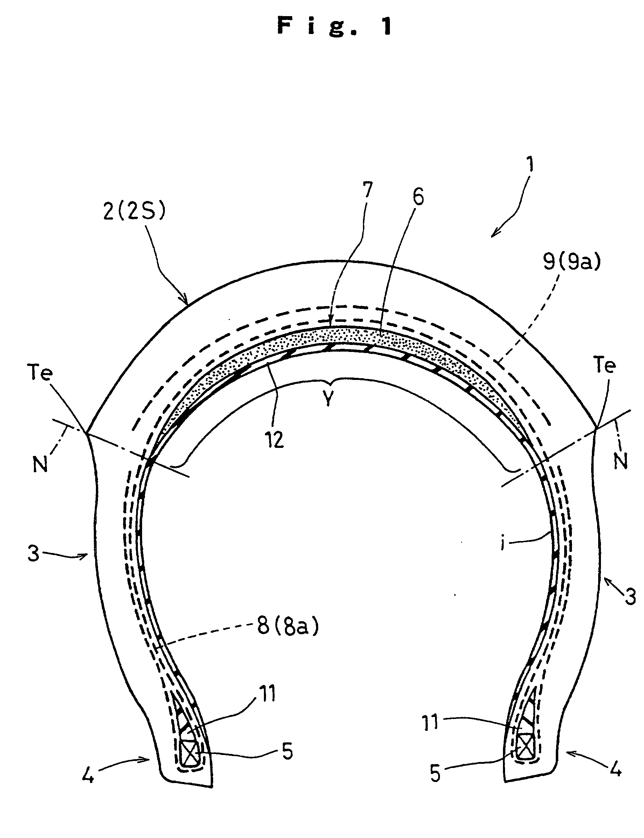

An embodiment of a pneumatic tyre and a method of producing the tyre according to the invention will be described by taking a tyre for a motorcycle as an example of the pneumatic tyre and based on the drawings. Figure 1 shows the tyre 1 for the motorcycle (hereafter this may be merely referred to as "the tyre"). The tyre 1 has a toroidal shape in which bead portions 4 are respectively provided to inside ends of sidewall portions 3 extending radially inwardly from opposite ends of a tread portion 2 and a seal unit 7 formed by sealing a sealant 6 for preventing a blowout into a sack-shaped member in advance is disposed to extend in the tread portion 2 and in a circumferential direction of the tyre prior to vulcanisation.

The tyre 1 in this example is reinforced by a cord layer including a toroidal carcass 8 bridging the bead portions 4,4 and a breaker 9 disposed radially outside the carcass 8 and inside the tread portion 2 to provide the required tyre strength and stiffness. Each bead portion 4 is provided with a bead apex rubber 11 having a triangular sectional shape and extending radially outwards from a bead core 10.

For the carcass 8, one or more carcass plies 8a with a radial or semi-radial structure in which cords are arranged at an angle of 70° to 90° with respect to the circumferential direction or a bias structure in which the carcass cords are arranged at an angle of 35° to 70° are used. The carcass 8 in this example is formed of one carcass ply 8a and opposite ends of the carcass ply 8a are folded back around the bead cores 5 from axially inside the tyre towards the outside and locked.

The breaker 9 is formed of one or more breaker plies 9a in which breaker cords are arranged at an angle of 0° to 70° with respect to the circumferential direction, but the breaker 9 can be omitted depending on required tyre performance.

In the present embodiment, the seal unit 7 is disposed in the tread portion 2 and between the carcass 8 and an inner liner rubber 12 forming a tyre inner cavity face i. The inner liner rubber 12 is made of rubber having excellent gas impermeability such as butyl rubber, butyl rubber halide, brominated butyl rubber. It has a substantially uniform thickness of about 0.5 to 2.0mm, for example, and substantially the entire area of an inner face of the carcass 8 is covered with the inner liner rubber 12.

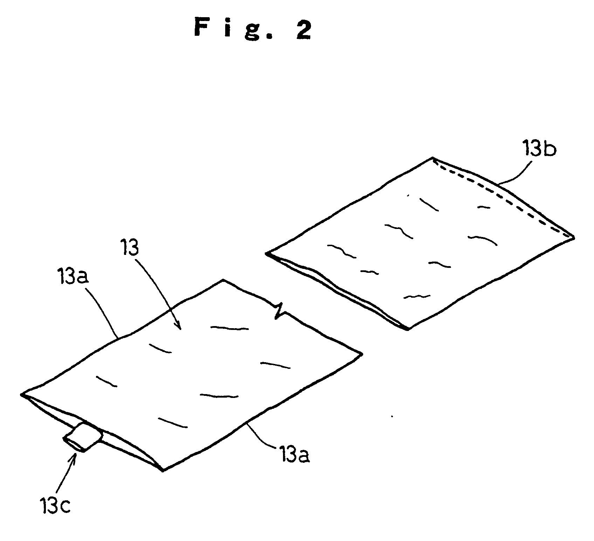

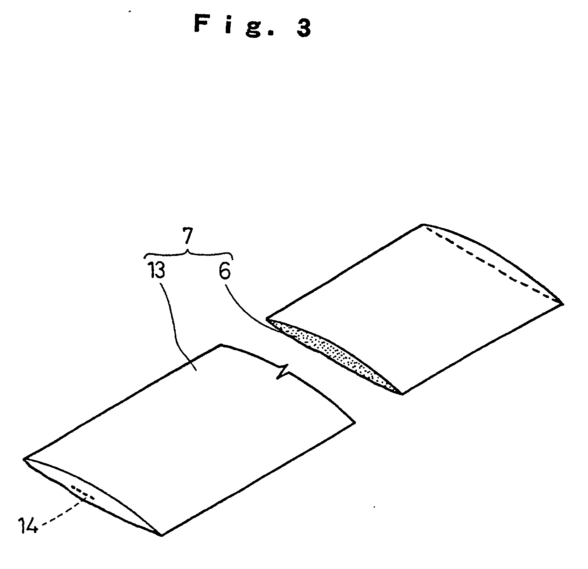

The seal unit 7 is formed by sealing the sealant 6 for preventing the blowout in a sack-shaped member 13 made of a polymer film, for example, in advance as shown in Figures 2 and 3. In this example, the sack-shaped member 13 has a sack shape in which opposite side edges 13a,13a and a bottom portion 13b of the sack-shaped member 13 are closed and an injection opening 13c for injecting the sealant 6 is provided to an end of the sack-shaped member 13. Width and length dimensions of the sack-shaped member 13 are properly determined according to the size of the tyre. In the seal unit 7, after injecting the sealant 6 into the sack-shaped member 13, for example, without trapping air and the like, the injection opening 13c is closed by thermocompression bonding of the like to form a closure.

As a result, a band-shaped seal unit 7 having a substantially uniform cross-sectional area is formed. Such a seal unit 7 has excellent portability and the shape with a constant width and a constant length is stable due to the existence of the sack-shaped member 13, which contributes to keeping uniform the shape of a seal layer. By disposing such a seal unit 7 formed by sealing the sealant 6 for preventing the blowout in the sack-shaped member 13 in advance in the tread portion 2 before vulcanisation, it is extremely easy to handle the sealant 6 in producing the tyre, the shape of the seal layer can be maintained uniform, and the steps of injecting the sealant 6 by using an injector or the like after vulcanisation and closing the injection opening after vulcanisation can be omitted, thereby making production of the tyre easier.

It is preferably that such a seal unit 7 constitutes 70% or more and preferably 80% or more of a length of a tread inside area Y in a tyre meridianal section, for example. The "tread inside area Y" refers to an area on the tyre inner cavity face i sandwiched between normals N,N to a tread faced 2S at tread edges Te.

The material forming the sack-member 13 of the seal unit 7 is preferably polymer film material and may be material with or without a rubber mould releasing property. A material having the necessary degree of extensibility so as to allow it to be expanded with the surrounding rubber in moulding and vulcanisation of the raw cover of the tyre is particularly preferable. For such film material, material in which an elongation of 20% or more is produced by a load of 400g per a width of 8mm of the film is particularly preferable for example.

As the material of the sack-shaped member 13, polyfluoroethylene resin such as TEFLON (a trademark that belongs to DuPont) is preferable and the required extensibility can be obtained by setting the thickness of the material at 0.05mm to 0.15mm, e.g. 0.1mm for example. In addition to the polyfluoroethylene resin, a nylon film may be also used. The nylon film mainly made of nylon 6 (under a trade name of "Rayfan NO" and produced by Toray Synthetic Film Co Ltd), for example, is particularly preferable. Physical properties of such a nylon film are shown in Table 1.

**Table 1**

| Item | Unit | Value of physical property | Measuring method |
|---|---|---|---|
| Density | g/cm³ | 1.13 | Density gradient tube method |
| Melting point | °C | 215 | |
| Tensile strength | kg/mm² | 6 - 9 | ASTM-D882 |
| Elongation | % | 300 - 400 | ASTM-D882 |
| Young's modulus | kg/mm² | 45 - 55 | ASTM-D882 |
| Tear strength | g | 50 - 60 | ASTM-D1922 |
| Impact strength | kg-cm/mm | 1600 | Falling ball impact method |
| Water vapour permeability | g/m² day 0.1mm | 60 - 80 | JIS-Z208 40°C RH 90% |
| Oxygen permeability | c.c./m² day atm 0.1 mm | 6 | ASTM-D1434 20°C dry |
| Haze | % | 4 - 6 | JIS-K6718 |
| Coefficient of static friction | - | 0.5 - 0.7 | (30µ,20°C,65%RH) |

As a result of various experiments carried out by the inventors, it has been shown that the sack-shaped member 13 has the required rubber mould releasing property and has satisfactory extensibility even if the thickness of the member 13 is about 25 µ, for example, which such a nylon film is used for the member 13. In addition to the nylon film in the above example, a general polyethylene film, for example, may be employed.

As the above sealing 6, viscous material with a coefficient of viscosity of 2.0 to 10.0 mPa's (temperature: 20°C), for example, which is in a liquid state at room temperature (20°C) can be used satisfactorily. Moreover, various liquid puncture sealants which enter and seal a nail puncture or the like at a temperate in a range of -20°C to 60°C and delays leakage of tyre inner pressure can be used. In this example, a mixture of butyl rubber and polybutene is used as the sealant 6 and the mixture ratio is preferably 40 to 60 : 60 to 40 by weight for example.

Next, an example of the method of producing the tyre 1 will be described.

The method of producing the tyre of the present embodiment includes an inner liner rubber assembly step, a seal layer forming step, a carcass ply assembly step, a raw cover body forming step, and a vulcanising step.

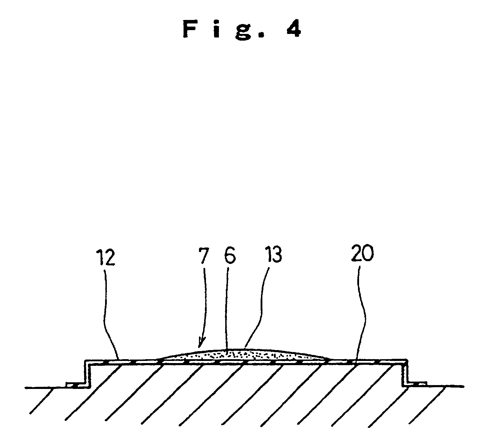

In the inner liner rubber bonding step, as schematically shown in Figure 4, the inner liner rubber 12 cut to a predetermined width and a predetermined length is assembled onto a cylindrical moulding former 20. Then, in the seal layer forming step, as schematically shown in Figure 4, the seal unit 7 formed by sealing the sealant 6 for preventing the blowout in the sack-shaped member 13 in advance is wound around an outer face of the inner liner rubber 12 in an area corresponding to the tread portion 2 to form the seal layer extending in a circumferential direction of the tyre.

Thus, in the method of producing the tyre according to the invention, the conventional step of applying the mould release agent and the sealant to the inner liner rubber one by one can be replaced by the extremely simply operation of bonding the seal unit 7, which has constant width and thickness, to a predetermined position on the inner liner rubber 12. As a result, the operation is substantially simplified and productivity may be improved. At this time, the seal unit 7 is wound such that an overlap portion in which a winding starting end and a winding finishing end overlap each other in a radial direction is formed.

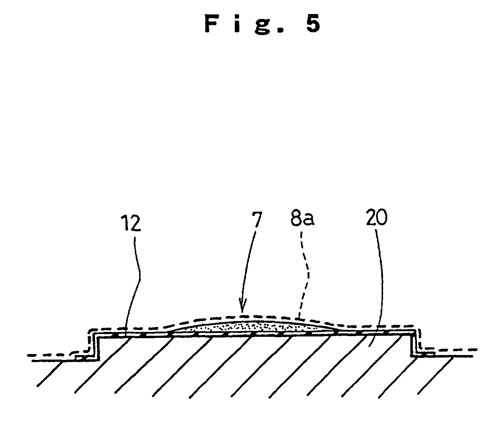

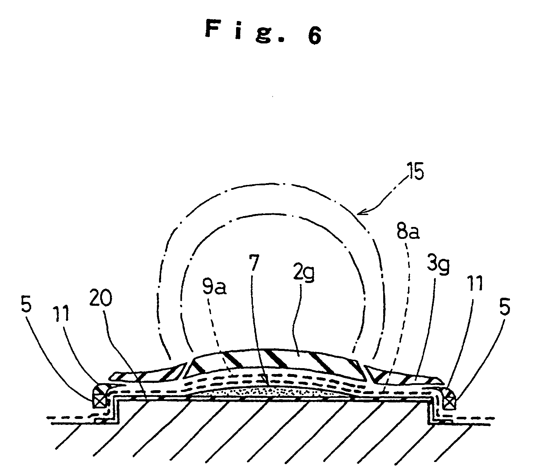

In the carcass ply assembly step, as schematically shown in Figure 5, the carcass ply 8a is bonded to an outside of the seal unit 7 by winding the carcass ply 8a around the seal unit 7. In the raw cover body forming step, as schematically shown in Figure 6, other tyre main body structure material including bead cores 5,5, e.g. a breaker ply 9a, a tread rubber 2g, sidewall rubber 3g, bead apex rubbers 11, and the like are added and this is expanded into a toroidal shape to form the raw cover body 15. Opposite ends of the carcass ply 8a are folded back, for example, prior to expanding into the toroidal shape.

In the vulcanising step, the raw cover body 15 is put into a vulcanising mould to carry out vulcanisation at predetermined temperature and pressure, thereby obtaining the pneumatic tyre 1 as shown in Figure 1. The sack-shaped member of the seal unit 7 can be elongated in the circumferential direction of the tyre with expanding deformation in the raw cover body forming step and the vulcanising step.

As described above, according to the method of producing the pneumatic tyre of the present embodiment, because the seal unit 7, having uniform width and thickness, is bonded to the inner liner rubber instead of applying the mould release agent or sealant, the pneumatic tyre 1 can be obtained in which efficiency of the operation is producing the tyre is excellent, the seal layer can be formed with accuracy and stabilised, variations in volume of the seal layer can be avoided, and the thickness of the layer of the sealant 6 is uniform.

As described above, according to the invention, in the pneumatic tyre in which the sealant for preventing the blowout sealed by a sealing rubber sheet is disposed to extend in a circumferential direction in the tread portion, the seal unit formed by sealing the sealant for prevent the blowout in the sack-shaped member in advance is disposed to extend in the circumferential direction of the tyre in the tread portion prior to the vulcanisation. Therefore, it is unnecessary to apply the sealant to the inner liner rubber in every tyre production and it is possible to easily form the uniform seal layer with accuracy by using the seal unit. Because the injection step for injecting the sealant and the closing step for closing the injection hole for injecting the sealant are unnecessary after the tyre vulcanisation, the producing process can be substantially simplified.

According to the method of producing the pneumatic tyre of the invention, the seal layer can be formed by a simple operation in which the seal unit formed in advance with uniform width and thickness is bonded to the inner liner rubber instead of applying the mould release agent or the sealant. Therefore, efficiency of the operation is excellent and the width of the seal layer and the like may be controlled with high accuracy. As a result, variations in volume of the sealant can be avoided and the pneumatic tyre in which the thickness of the layer of the sealant is uniform can be produced easily and efficiently.

### EXAMPLE

A tyre for a motorcycle of a tyre size of 3.00-10 was produced for trial according to the above producing method by using a seal unit shown in Table 2 to obtain a satisfactory pneumatic tyre shown in Figure 1. Then, the pneumatic tyre was mounted on a rim and inflated. A nail with a diameter of 3mm was stuck in the tyre from the outer surface side of the tread portion and pulled out. When inner pressure was measured after travelling about 200km, about 85% or more of the inner pressure before sticking of the nail was maintained and almost no reduction in inner pressure occurred.

**Table 2**

| Specifications of the seal unit | |
|---|---|
| | |

| Sack-shaped member | |
|---|---|
| • Material | Polyfluoroethylene |
| • Width (mm) | 100 |
| • Length (mm) | 800 |
| • Cross-sectional area (mm²) | 150 |

| Sealant composition | |
|---|---|
| Butyl rubber | 60 parts by weight |
| Polybutene | 40 parts by weight |
| White filler | 18 parts by weight |
| Zinc oxide | 3 parts by weight |

## Claims

1. A pneumatic tyre (1) having a toroidal shape in which bead portions (4) are connected to sidewall portions (3) extending radially inward from opposite ends of a tread portion (2) and a sealant (6) for preventing a blowout is disposed to extend in a circumferential direction in said tread portion, wherein the sealant is in a seal unit (7) formed by sealing in advance said sealant for preventing said blowout in a sack-shaped member (13) **characterised in that** the seal unit (7) is disposed between a carcass ply (8) and an inner liner rubber (12) so as to extend in said circumferential direction of said tyre in said tread portion (2) prior to vulcanisation.

2. A method of producing a pneumatic tyre (1) having a toroidal shape in which bead portions (4) are connected to sidewall portions (3) extending radially inward from opposite ends of a tread portion (2) and a sealant (6) for preventing a blowout is disposed to extend in a circumferential direction in said tread portion (2), said method comprising sealing said sealant (6) for preventing blowout in a sack shaped member (13) to form a seal unit (7), assembling an inner liner rubber (12) onto a moulding former (20), forming a raw cover body by adding other tyre main body structure materials including bead cores (5) and vulcanising, **characterised in that** the seal unit (7) is assembled into the tyre after the inner liner assembly and before the raw cover body assembly so that the seal unit (7) is between the inner liner rubber (12) and the carcass ply (8).

## Patentansprüche

1. Luftreifen (1) mit einer Torusform, in welchem Wulstabschnitte (4) mit Seitenwandabschnitten (3) verbunden sind, die sich von entgegengesetzten Enden eines Laufstreifenabschnitts (2) radial nach innen erstrecken, und ein Abdichtungsmittel (6) zum Verhindern eines Ausblasens derart angeordnet ist, dass es sich in einer Umfangsrichtung in dem Laufstreifenabschnitt erstreckt, wobei das Abdichtungsmittel sich in einer Abdichtungseinheit (7) befindet, die durch vorhergehendes Abdichten des Abdichtungsmittels zum Verhindern des Ausblasens in einem sackförmigen Element (13) gebildet ist, **dadurch gekennzeichnet, dass** die Abdichtungseinheit (7) vor der Vulkanisation zwischen einer Karkasslage (8) und einem Innerlinerkautschuk (12) derart angeordnet ist, dass sie sich in dem Laufstreifenabschnitt (2) in der Umfangsrichtung des Reifens erstreckt.

2. Verfahren zum Herstellen eines Luftreifens (1) mit einer Torusform, in welchem Wulstabschnitte (4) mit Seitenwandabschnitten (3) verbunden sind, die sich von entgegengesetzten Enden eines Laufstreifenabschnitts (2) radial nach innen erstrecken, und ein Abdichtungsmittel (6) zum Verhindern eines Ausblasens derart angeordnet wird, dass es sich in dem Laufstreifenabschnitt (2) in einer Umfangsrichtung erstreckt, wobei das Verfahren umfasst: Abdichten des Abdichtungsmittels (6) zum Verhindern eines Ausblasens in einem sackförmigen Element (13), um eine Abdichtungseinheit (7) zu bilden, Aufbauen eines Innerlinerkautschuks (12) auf eine Formungstrommel (20), Bilden eines Rohunterbaukörpers durch Hinzufügen weiterer Materialien des Reifenhauptkörperaufbaus, die Wulstkerne (5) umfassen, und Vulkanisieren, **dadurch gekennzeichnet, dass** die Abdichtungseinheit (7) nach dem Innerlineraufbau und vor dem Rohunterbaukörperaufbau derart in den Reifen eingebaut wird, dass die Abdichtungseinheit (7) sich zwischen dem Innerlinerkautschuk (12) und der Karkasslage (8) befindet.

## Revendications

1. Pneumatique (1) ayant une forme toroïdale dans lequel des portions de talon (4) sont reliées à des portions de paroi latérale (3) s'étendant radialement vers l'intérieur à partir d'extrémités opposées d'une portion de chape (2) et un produit d'étanchéité (6) pour empêcher une explosion est placé pour s'étendre dans une direction circonférentielle dans ladite portion de chape, dans lequel le produit d'étanchéité est dans une unité d'étanchéité (7) formée en obturant à l'avance ledit produit d'étanchéité pour empêcher ladite explosion dans un élément en forme de sac (13) **caractérisé en ce que** l'unité d'étanchéité (7) est placée entre une couche de carcasse (8) et un caoutchouc de doublure intérieur (12) de manière à s'étendre dans ladite direction circonférentielle dudit pneumatique dans ladite portion de chape (2) avant d'effectuer la vulcanisation.

2. Procédé de fabrication d'un pneumatique (1) ayant une forme toroidale dans laquelle des portions de talon (4) sont reliées à des portions de paroi latérale (3) s'étendant radialement vers l'intérieur à partir d'extrémités opposées d'une portion de chape (2) et un produit d'étanchéité (6) pour empêcher une explosion est placé pour s'étendre dans une direction circonférentielle dans ladite portion de chape (2), ledit procédé comprenant l'obturation dudit produit d'étanchéité (6) pour empêcher une explosion dans un élément en forme de sac (13) pour former une unité d'étanchéité (7), l'assemblage d'un caoutchouc de doublure interne (12) sur un gabarit de moulage (20), la formation d'un corps de couverture brut en ajoutant d'autres matériaux de structure de corps principal de pneumatique y compris des tringles (5) et la vulcanisation, **caractérisé en ce que** l'unité d'étanchéité (7) est assemblée après l'assemblage de la doublure interne et avant l'assemblage du corps de couverture brut de sorte que l'unité d'étanchéité (7) est située entre le caoutchouc de doublure interne (12) et la couche de carcasse (8).
